## Europäisches Patentamt
## European Patent Office
## Office européen des brevets

(19)

(11) Veröffentlichungsnummer: **0 268 874**
**A1**

(12) **EUROPÄISCHE PATENTANMELDUNG**

(21) Anmeldenummer: **87116075.0**

(22) Anmeldetag: **02.11.87**

(51) Int. Cl.⁴: **A01K 1/12**

Ein Antrag gemäss Regel 88 EPÜ auf Berichtigung der Seite 1 des Originals der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **08.11.86 DE 3638221**

(43) Veröffentlichungstag der Anmeldung:
**01.06.88 Patentblatt 88/22**

(84) Benannte Vertragsstaaten:
**AT BE CH DE ES FR GB GR IT LI LU NL SE**

(71) Anmelder: **Irps, Hartwig, Dr.-Ing.**
**Beckmannstrasse 9**
**D-3303 Vechelde(DE)**

(72) Erfinder: **Irps, Hartwig, Dr.-Ing.**
**Beckmannstrasse 9**
**D-3303 Vechelde(DE)**

(54) **Stall - und Weide - Melkstand für Milchkühe.**

(57) Die Erfindung betrifft einen preiswerten Melkstand für landwirtschaftliche Betriebe mit kleinen Kuhbeständen, der sowohl im Stall als auch auf der Weide benutzt werden kann. Damit ist mit ihm der Wechsel vom Anbindestall zum Laufstall möglich.

Die Breite des Melkstandes entspricht in allen Varianten der zulässigen Transportbreite bei Straßenfahrten. Der Melker kann in sitzender Position mit den Melkgeschirren arbeiten. Durch die Konzentration von jeweils vier oder fünf Kühen auf kleinstem Raum können bei der Ausrüstung des Melkstandes mit der Melktechnik die milchführenden Teile minimiert werden. Dieses begünstigt die Reinigung aller milchführenden Teile beim mobilen Einsatz mit einem Reinigungsautomaten in der Milchkammer des Betriebes.

Das Tierverhalten der Kühe in dem Stand entspricht dem günstigen Tierverhalten der Kühe in einem Tandem - Melkstand.

Der Melkstand ist einfach in der Ausführung und kann deshalb von jeder Schlosserei im ländlichen Raum hergestellt werden.

Abbildung 5

## Stall - und Weide - Melkstand für Milchkühe

Die Erfindung betrifft einen mobilen Melkstand für kleine Kuhbestände in den landwirtschaftlichen Betrieben, die aus Kostengründen den Wechsel vom Anbindestall zum Laufstall bisher nicht vollziehen konnten und deshalb weiterhin entgegen den Vorstellungen über ein zeitgemäßes Tier - Haltungssystem Milch produzieren müssen.

Die Erfindung beinhaltet die folgenden Anforderungen:

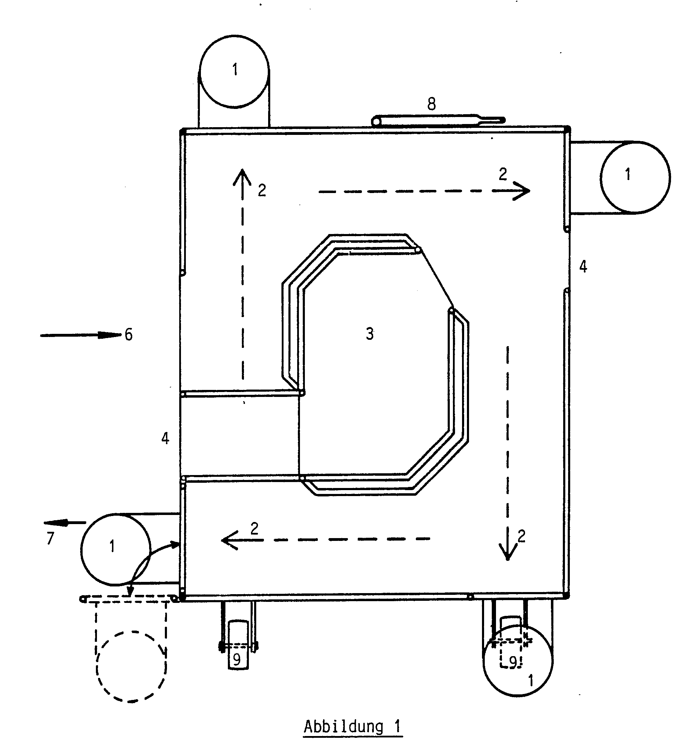

a) Die Kühe sollen möglichst im Melkstand um einen Vollkreis gedreht werden, da in den kleinen Betrieben wenig Platz für Laufgänge zur Verfügung steht. Dieses ist die Ausführungsform mit einem Tiereingang und einem Tierausgang (siehe Abbildung 1).

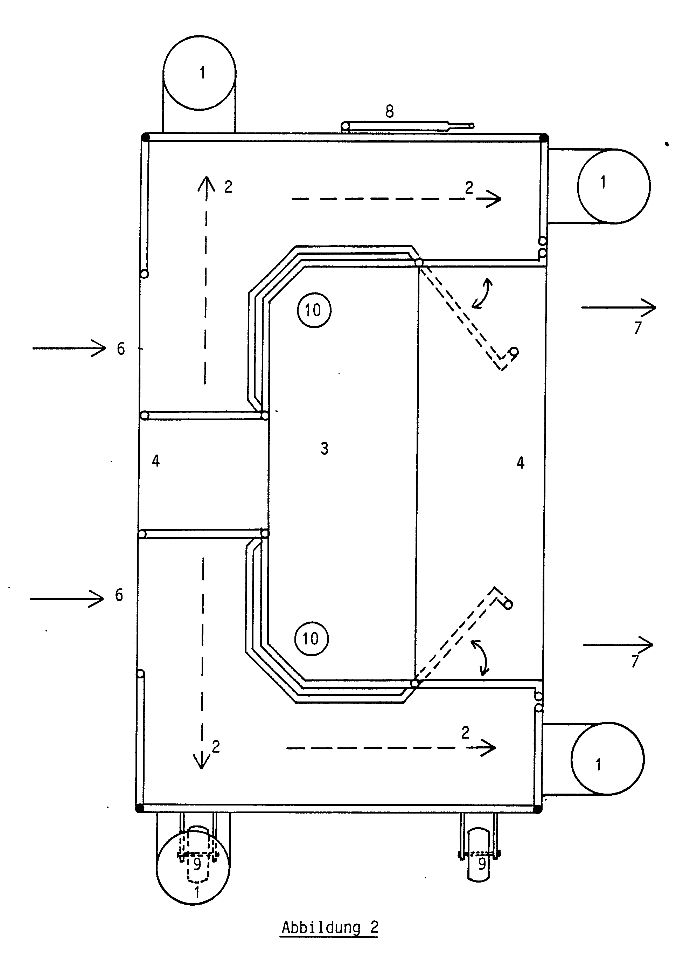

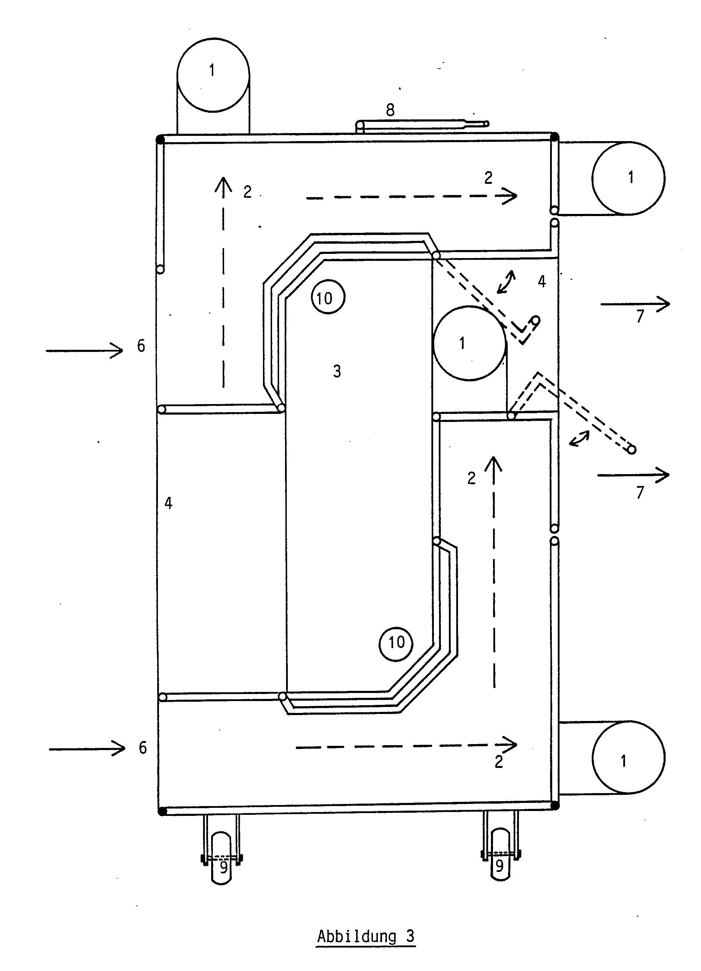

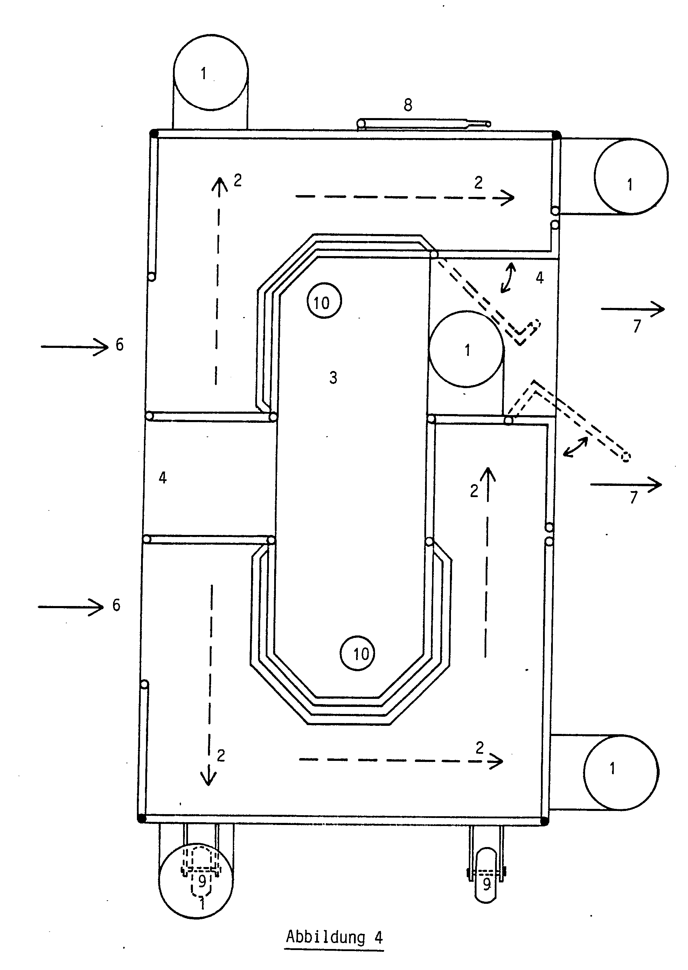

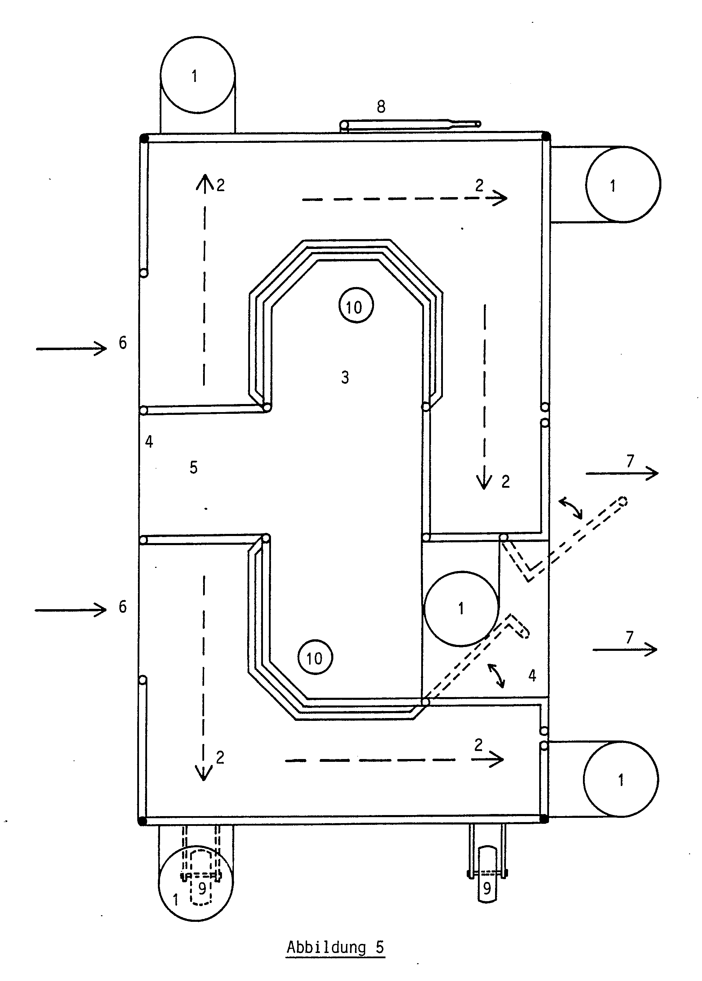

b) Wird gegenüber von a) eine höhere Arbeitsleistung des Melkers gefordert, so sollen die Eingangs - und Ausgangsseiten gegenüber liegen (siehe Abbildungen 2 bis 5).

c) Das Tierverhalten in dem Melkstand soll dem Tierverhalten in den herkömmlichen Tandem - Melkständen entsprechen, da dort die Kühe frei stehen ohne sich gegenseitig zu stören.

d) Die Kühe sollen höher als der Melker stehen, um eine günstige Sitzposition zu erreichen.

e) Aus milchhygienischen Gründen sollen die milchführenden Teile so minimiert werden, damit sie bei Weidebetrieb zwecks Reinigung leicht zum stationär installierten Reinigungsautomaten transportiert werden können.

f) Der Melker soll gleichzeitig mit vier oder fünf Melkzeugen melken können.

g) Alle auf dem Markt befindlichen Melkmaschinenhersteller sollen den Melkstand ausrüsten können.

h) Zwecks Tierbehandlung soll eine für Mensch und Tier gefahrenfreie Fixierung der Kühe möglich sein.

i) Der Weidemelkbetrieb soll unter einem Dach möglich sein.

j) Der Melkstand darf die zulässige Transportbreite von gezogenen Arbeitsgeräten nach der Straßenverkehrs - Zulassungsordnung nicht überschreiten ( in der BR Deutschland maximal 3,00 m).

k) Niedrige Investitionskosten sollen erreicht werden.

Stall - und Weide - Melkstand; Erläuterungen zu den Abbildungen.

Abbildung 1: 1x4 Stall - und Weide - Melkstand

Abbildung 2: 2x2 Stall - und Weide - Melkstand

Abbildung 3: 2x2 Stall - und Weide - Melkstand

Abbildung 4: 1x2 + 1x3 Stall - und Weide - Melkstand

Abbildung 5: 1x3 + 1x2 Stall - und Weide - Melkstand

Legende:

1 = Kraftfuttertrog; für den Transport werden die Tröge an der Seite ausgehängt.

2 = Kuhplatz

3 = Arbeitsbereich des Melkers

4 = Ein-und Ausgang des Melkers

5 = Ein-und Ausgang des Melkers ohne Plattformteil

6 = Eingang der Kühe

7 = Ausgang der Kühe

8 = Schlepperdeichsel

9 = Transporträder; für den Transport werden sie heruntergedreht

10 = Sitzgelegenheit für den Melker

**Ansprüche**

1. Stall - und Weide - Melkstand für Milchkühe, dadurch gekennzeichnet, daß vier Kühe bei einem Tiereingang oder zwei plus zwei Kühe beziehungsweise zwei plus drei Kühe bei zwei Tiereingängen vorzugsweise rechtwinklig zueinander auf eine für den Straßenverkehr zulässige Plattform so gestellt werden, daß sich der Arbeitsbereich des Melkers in der Mitte ergibt.

Stall - und Weide - Melkstand für Milchkühe nach Anspruch 1.:

2. dadurch gekennzeichnet, daß der Melker bei Benutzung eines Roll - oder Drehstuhles mehrere Euter der Kühe in etwa von der gleichen Position aus erreichen kann;

3. dadurch gekennzeichnet, daß bei einer eingelegten Bodenplatte im Arbeitsbereich des Melkers die Kühe um die Höhe der Plattform höher stehen. Dieses ermöglicht eine ergonometrisch günstige Sitzposition des Melkers;

4. dadurch gekennzeichnet, daß die Bodenplatte im Arbeitsbereich des Melkers entfernt werden kann und die Plattform bis zu einer für die Kühe zulässige Stufenhöhe aufgebockt werden kann;

5. dadurch gekennzeichnet,

daß der Aufbau des Melkstandes mit oder ohne Plattform über eine Melkergrube gestellt werden kann. Dann hat der Melker einen stehenden Arbeitsplatz;

6. dadurch gekennzeichnet,

daß der Rahmen im Bereich des Melker - Ausganges beim stationären Betriebseinsatz entfernt werden kann;

7. dadurch gekennzeichnet,

daß der Melkstand für den Weidebetrieb mit einem Dach versehen werden kann;

8. dadurch gekennzeichnet,

daß Kraftfuttertröge in der Regel zur Ausrüstung des Melkstandes gehören.

Abbildung 1

Abbildung 2

Abbildung 3

Abbildung 4

Abbildung 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 563 964 (TABARY)<br>* Insgesamt *<br>--- | 1,2,8 | A 01 K 1/12 |
| A | BE-A- 897 346 (CREMERS)<br>* Seite 5, Zeilen 12-24; Figuren 1,2 *<br>--- | 1,3,5,7 | |
| A | FR-A-2 285 067 (VILLEDIEU)<br>--- | | |
| E | LANDTECHNIK, Band 42, Nr. 4, April 1987, Seiten 155-157, Lehrte-Hannover, DE; H. IRPS: "Stall- und Weide-Melkstand für kleine Kuhbestände"<br>* Insgesamt *<br>----- | 1-8 | |

RECHERCHIERTE SACHGEBIETE (Int. Cl.4)

A 01 K

Der vorliegende Recherchenbericht wurde für alle Patentansprüche erstellt

| Recherchenort | Abschlußdatum der Recherche | Prüfer |
|---|---|---|
| DEN HAAG | 16-02-1988 | VON ARX V.U. |